# EUROPEAN PATENT APPLICATION

(11) **EP 4 361 118 A1**
(43) Date of publication of application: **01.05.2024**
(21) Application number: 22306646.5
(22) Date of filing: 31.10.2022
(51) Int. Cl.: C04B 33/04, C04B 33/13, C04B 33/32, C04B 38/00

(54) **LIGHTWEIGHT CERAMICS**

(71) Applicant: IMERTECH SAS, 75015 Paris (FR)
(72) Inventor: CAILLIET, Sophie, 31270 CUGNAUX (FR)
(74) Representative: Haseltine Lake Kempner LLP

(57) **Abstract**

Lightweight ceramics and their manufacture and additives used in the manufacturing process to induce porosity, reduce density and to lightweight the ceramic.

## Description

### FIELD OF INVENTION

The invention relates to lightweight ceramics and their manufacture, using additives in the manufacturing process to induce porosity, reduce density and to lightweight the ceramic.

### BACKGROUND

It is desirable to lightweight (i.e., increase the porosity/reduce the bulk density of) ceramic products, such as ceramic slabs, e.g., tiles or countertops, by increasing their porosity. However, challenges persist in controlling the properties of the finished ceramic. This is especially noticeable in larger ceramic pieces, in which the uniformity of properties across the piece has typically been difficult to attain. A related challenge is that furnaces, especially larger furnaces, can have a temperature gradient of 100 °C or even more. This can be detrimental to the mass production of ceramic materials with consistent properties adherent to industry standards. For example, ceramic raw materials of the same composition fired in the same furnace can form into ceramics having inconsistent properties, such as inconsistent/unpredictable degrees of lightweighting. A related challenge is that increasing porosity of the ceramic can lead to an unacceptable amount of water absorption.

### SUMMARY OF INVENTION

The invention provides a ceramic precursor composition comprising a first mineral, a porogen, and a pore-forming agent. The first mineral is selected from kaolin, ball clay, feldspar, talc, bentonite and combinations thereof. The porogen is selected from a carbide and/or a carbonate compound. The pore-forming agent comprises oxide-based microspheres.

The invention also provides a kit of parts comprising a part A and a part B. The part A comprises a porogen and a first mineral. The porogen is selected from a carbide and/or a carbonate compound and the first mineral is selected from kaolin, ball clay, feldspar, talc, bentonite, and combinations thereof. The part B comprises a pore-forming agent, the pore-forming agent comprising oxide-based microspheres.

The invention also provides an additive composition for a ceramic. The additive composition comprises a porogen and a pore-forming agent. The porogen is selected from a carbide and/or a carbonate compound, and the pore-forming agent comprises oxide-based microspheres.

Using both a porogen and a pore-forming agent as defined surprisingly results in a more stable lightweighting across a range of firing temperatures. Within a single ceramics furnace, the temperature in a single firing batch can vary by e.g. 80 °C or even more. This can cause undesirable variations in material properties of finished ceramics. Therefore the stability of the lightweighting effect across a range of firing temperatures is highly beneficial.

Another benefit of the combined use of the porogen and pore-forming agent is a reduction in water absorption compared to known methods and compared to using only one or the other. Water absorption is often undesirable, especially in large slab format ceramics that may benefit from this invention, for example if used in construction or for a countertop.

The invention also provides a method of preparing a ceramic. The method comprises
i. Shaping and firing a ceramic precursor composition as defined above, or
ii. Mixing parts A and B of the kit of parts as defined above, shaping and then firing the mixture, or
iii. Combining the additive composition as defined above with at least a first mineral selected from kaolin, ball clay, feldspar, talc and/or bentonite, shaping and then firing the mixture.

The invention also provides a ceramic made by the method of the invention.

The invention also provides use of the porogen and pore-forming agent in combination as defined above to stably lightweight a ceramic.

### BRIEF DESCRIPTION OF DRAWINGS

Figure 1 shows how lightweighting remains stable or varies across an 80 °C firing temperature range for selected ratios of pore forming agent to porogen;
Figure 2 shows the stability of the degree of lightweighting across an 80 °C firing temperature range for various ratios of pore forming agent to porogen;

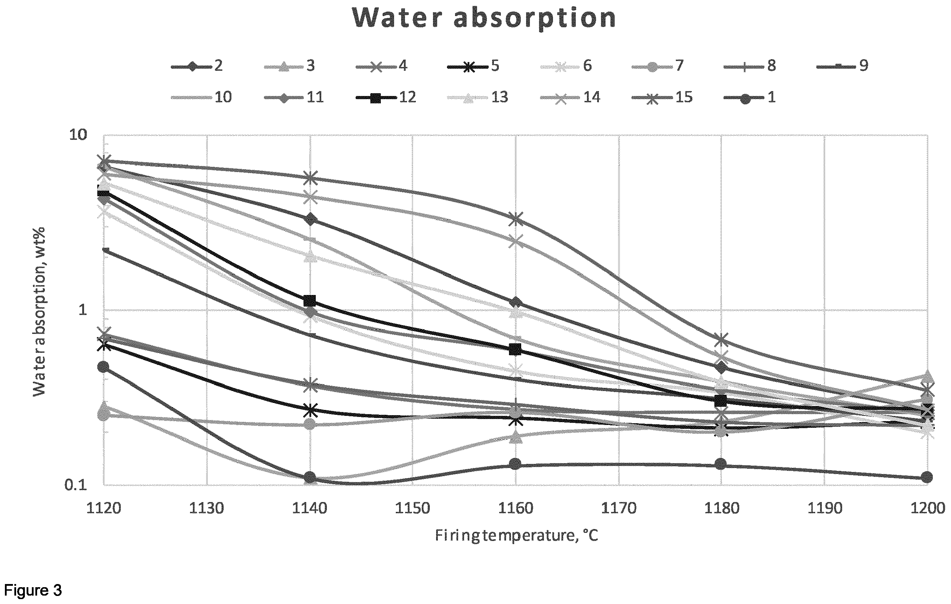

Figure 3 shows the relationship between composition, firing temperature and water absorption (wt. %) of the fired ceramic.

### DETAILED DESCRIPTION

### Porogen

A porogen is a material used to make pores in a ceramic. A porogen is not porous itself but will decompose upon heating, for example, at ceramic firing temperatures, generating gases such as CO₂. It is believed that pockets of gas remaining in the ceramic generate pores in the final ceramic.

The porogen may comprise or be a carbide compound and/or a carbonate compound.

In certain embodiments the porogen is silicon carbide. Silicon carbide is a preferred material for the porogen due to its hardness and high crush strength, meaning it can withstand the mixing and grinding processes that precede shaping and firing a ceramic. Other carbides include boron carbide and metal carbides, e.g., calcium carbide, aluminium carbide, magnesium carbide, beryllium carbide and the like.

The porogen may be a carbonate compound, for example, an alkali or alkali earth metal carbonate, for example, magnesium carbonate or calcium carbonate. As described above, it is believed that upon firing the carbonate compound will decompose forming pockets of CO₂ gas which will induce pore formation in the final ceramic.

Typically, the porogen will be in powder form to aid its decomposition during the firing process. For example, the porogen (e.g., silicon carbide) may have a d₅₀ of less than about 10.0 µm and a BET specific surface area of from about 1.0 to about 25.0 m²/g. For example, the porogen may have a d₅₀ of less than about 1.0 µm and a BET specific surface area of from about 5.0 to about 15.0 m²/g.

As used herein, the term "BET specific surface area" refers to the area of the surface of the particles of a particulate material with respect to unit mass, determined according to the BET method by the quantity of nitrogen adsorbed on the surface of said particles so as to form a monomolecular layer completely covering said surface. A suitable measurement method includes the BET method, AFNOR standard X11-621 and 622 or ISO 9277).

The porogen may be coated to form a strong pore wall on firing the ceramic, as described in EP2190799A2, the contents of which are incorporated by reference.

### Pore-forming agent

The pore-forming agent used in the invention comprises or consists of microspheres.

The microspheres may have a maximum diameter of about 1000 µm, for example, a maximum diameter of about 750 µm, or a maximum diameter of about 500 µm. In certain embodiments, the microspheres have a maximum diameter of about 200 µm. The maximum diameter may be determined using any suitable sizing or classification techniques, for example, sieving with an appropriately sized sieve.

The microspheres may be formed of cenospheres and/or plerospheres. Cenospheres are substantially hollow spheres with an outer shell. The outer shell may be closed or partially open. Plerospheres are also substantially hollow particles, generally larger than cenospheres, and typically filed with a plurality of cenospheres.

Any oxide-based microsphere may be used in the invention. For example, crystalline and/or amorphous alumina, silica, aluminosilicate, residual glass phase, and mixtures thereof may be used for the microspheres. The microspheres may comprise or consist of alumina, perlite, mullite, and combinations thereof. In certain embodiments, the pore-forming agent comprises or consist of perlite, i.e., all of the microspheres may be perlite microspheres.

Alternatively or in addition to perlite, synthetic oxide-based microspheres may be used in the invention. Expanded granular materials as defined in EP3891107A1, the contents of which are incorporated by reference, are synthetically-made oxide-based microspheres suitable for use in the invention.

Glassy minerals, commonly referred to as "volcanic glasses," suitable for use as the oxide-based microspheres in the invention are generally formed by the rapid cooling of siliceous magma or lava. Exemplary glassy minerals include, for example, perlite, pumice, pumicite, obsidian, pitchstone, and volcanic ash. Perlite comprises silicon dioxide, aluminum oxide, and a combination of other metals or metal oxides, such as sodium oxide and iron oxide. For example, perlite may comprise about 70% to about 75% SiO₂, about 12% to about 14% Al₂O₃, about 0.5% to about 2% Fe₂O₃, about 3% to about 5% Na₂O, about 4% to about 5% K₂O, about 0.4% to about 1.5% CaO (by weight), and small amounts of other metallic elements. Perlite is typically gray to green in color with a vitreous, pearly luster, and characteristic concentric or arcuate onion skin-like (e.g., perlitic) fractures. Abundant spherical cracks can cause perlite to break into small pearl-like masses.

Perlite is also characterized as a hydrated glassy mineral, comprising an amount of internal, e.g. chemically-bonded, water. The internal water content of natural, unprocessed perlite typically ranges from about 2% to about 6%, which can depend on the geographical source. According to some aspects of the present disclosure, the perlite source material (e.g., natural, unprocessed perlite) may have a water content of greater than 5.0% by weight. According to some aspects, the perlite source material may have a water content less than 6.0% or less than 5.0% by weight, e.g., from about 2.0% to about 5.0%, from about 2.5% to about 5.0%, from about 3.0% to about 5.0%, from about 3.5% to about 5.0%, from about 4.0% to about 5.0%, from about 2.0% to about 4.5%, from about 2.5% to about 4.5%, from about 3.0% to about 4.5%, from about 3.5% to about 4.5%, from about 2.0% to about 4.0%, from about 2.5% to about 4.0%, from about 2.5% to about 3.5%, from about 2.0% to about 3.5%, or from about 2.5% to about 3.5% by weight.

When heated at a high temperature (e.g., above about 750 °C or about 800 °C), the dehydrated perlite softens and at least a portion of the internal water vaporizes, which may cause the perlite to expand to a greater volume (e.g., about 5-20 times of the original volume). The vaporized water typically stretches the softened glassy material, forming small bubbles in the glassy matrix. The expanded perlite may include one or more cells, or parts of cells, in which a cell is essentially a void space partially or entirely surrounded by walls that become thinner through expansion of the glassy perlite material. Eventually particles of the expanded perlite material may break into smaller fragments. The presence of gas-filled or vacuous cells in a given volume of the expanded perlite typically results in a lower centrifuged wet density than for the same volume of unexpanded perlite. If at least a portion of the expanded cells are closed and air is entrapped therein, the particles of expanded perlite may float on water.

The expansion may be performed by heating the dehydrated perlite at a temperature that is high enough to cause softening of the glassy mineral. In some cases, for expansion, the dehydrated perlite may be heated at a temperature of at least 700 °C, at least 750 °C, at least 800 °C, at least 850 °C, at least 900 °C, at least 950 °C, at least 1000 °C, at least 1100 °C, or at least 1200 °C, e.g., a temperature ranging from about 700 °C to about 1200 °C, or from about 800 °C to about 1100 °C. In some examples herein, the heating may be performed quickly, e.g., for equal to or less than 60 seconds, e.g., for a period of time ranging from about 0.1 second to about 15 seconds, or from about 0.1 second to about 5 seconds.

As mentioned above, when expanded, the volume of the dehydrated perlite may be enlarged. For example, the expansion may enlarge the volume of the dehydrated perlite by at least 10%, e.g. a volume expansion of about 20%, about 50%, or about 100%. For example, the volume of the expanded perlite may be 2 times, 5 times, 10 times, 15 times, or 20 times greater than the volume of the unexpanded, dehydrated perlite.

Perlite microspheres may be strengthened by at least one of (1) heating the plurality of perlite microspheres at a temperature of at least about 600 °C for at least about five minutes to provide heat-treated perlite microspheres having reduced surface flaws relative to the perlite microspheres prior to heat treating; and (2) adding at least one metal component and at least one silicate component to the plurality of perlite microspheres to form a plurality of metal silicate-coated perlite microspheres. For example, the at least one metal component may be selected from the group consisting of metal nitrates, metal sulfates, metal aluminates, sodium metals, metal chlorides, metal alkoxides, metal acetates, metal formates, bayerite, pseudoboehmite, gibbsite, colloidal metals, metal gels, metal sols, metal trichlorides, ammonium metal carbonates, metal hydrates, and metal chlorohydrates. According to some embodiments, the at least one metal component may include at least one of aluminum, boron, lithium, zinc, and zirconium. According to some embodiments, the at least one silicate component may be selected from the group consisting of tetraethylorthosilicate, tetramethylorthosilicate, sodium silicate, alkali silicate, colloidal silica, solid silica, alkaline metal silicates, and sodium metasilicate. According to some embodiments, the perlite microspheres may be strengthened with at least one of boroaluminosilicate and lithium aluminosilicate.

The perlite microspheres may be formed by heating perlite particles. Thereafter, the heated perlite microspheres may be cooled, for example, to room temperature in ambient air. According to some embodiments, the cooled perlite microspheres may thereafter be heat-treated, for example, as described herein, to form strengthened perlite microspheres.

Without wishing to be bound by theory, it is believed that heating the perlite microspheres increases the strength (e.g., the compaction strength) of the perlite microspheres by removing and/or reducing flaws (e.g., cracks and pores) in the surface of the perlite microspheres. For example, the surface flaws may be reduced by heating the perlite microspheres at a sufficient temperature for a sufficient duration to soften the surface of the perlite microspheres. According to some embodiments, the heating may be sufficient to cause the perlite microspheres to soften.

As used herein, the terms "sphere" or "spherical" refer to a particle that, when magnified as a two-dimensional image, generally appears rounded and generally free of sharp corners or edges, whether or not the particle appears to be truly or substantially circular, elliptical, globular, or any other rounded shape. As a result, in addition to truly circular and elliptical shapes, other shapes with curved but not circular or elliptical outlines are considered as being a "sphere" or being as "spherical." A particulate form of perlite may also be considered to be a "sphere" or as being "spherical," even though it may have some individual particles that have agglomerated, thereby forming non-spherical agglomerates in the otherwise spherical material, or are otherwise non-spherical.

Perlite in the form of microspheres can be formed in accordance with the methods described in WO-A-2013/053635, the contents of which are hereby incorporated by reference. Generally, in this process, perlite ore and proppant is fed into an upright furnace and falls along a drop section through multiple heating zones in a furnish shaft of the furnace. The perlite ore is heated to a critical temperature at which the surfaces of the perlite plasticize and perlite grains are expanded on the basis of the propellant.

An exemplary microspherical alumina is Alodur (RTM) bubble alumina, available from Imerys Fuse Minerals. Microspherical alumina, also sometimes referred to as alumina bubbles, can be produced by various methods known in the art.

The pore-forming agent, e.g., comprising or consisting of perlite microspheres, may have a d₉₀ of no greater than about 500 µm, for example, no greater than about 475 µm, or no greater than about 450 µm, or no greater than about 425 µm, or no greater than about 400 µm, or no greater than about 375 µm, or no greater than about 350 µm, or no greater than about 325 µm, or no greater than about 300 µm, or no greater than about 275 µm, or no greater than about 250 µm. The d₉₀ may be at least about 100 µm, for example, at least about at least about 150 µm, at least about 200 µm. In certain embodiments, the d₉₀ is from about 150 µm to about 300 µm, for example, from about 200 µm to about 250 µm.

Unless otherwise specified, the particle size properties referred to are as measured by the well known conventional method employed in the art of laser light scattering, using a Mastersizer 2000 particle size analyser, as supplied by MALVERN (or by other methods which give essentially the same result). In the laser light scattering technique, the size of particles in powders, suspensions and emulsions may be measured using the diffraction of a laser beam, based on an application of Fraunhofer and Mie theory. Such a machine provides measurements and a plot of the cumulative percentage by volume of particles having a size, referred to in the art as the 'equivalent spherical diameter' (e.s.d), less than given e.s.d values. The mean particle size d₅₀ is the value determined in this way of the particle e.s.d at which there are 50% by volume of the particles which have an equivalent spherical diameter less than that d₅₀ value. The d₁₀ value is the value at which 10% by volume of the particles have an e.s.d less than that d₁₀ value. The d₉₀ value is the value at which 90% by weight of the particles have an e.s.d less than that d₉₀ value.

The pore-forming agent, e.g., comprising or consisting of perlite microspheres, may have a d₁₀ of at least about 10 µm, for example, at least about 20 µm, or at least about 30 µm, or at least about 40 µm, or at least about 50 µm, or at least about 75 µm, or at least about 80 µm, or at least about 85 µm, or at least about 90 µm, or at least about 95 µm, or at least about 100 µm.

The pore-forming agent, e.g., comprising or consisting of perlite microspheres, may have a d₅₀ of from about 25 µm to about 250 µm, for example, from about 50 µm to about 250 µm, or from about 100 µm to about 200 µm, or from about 125 µm to about 175 µm, or from about 75 µm to about 150 µm, or from about 100 µm to about 150 µm.

### First mineral

The first mineral is a material suitable for use in making a ceramic. It may be the primary mineral in a ceramic or a minor component. The first mineral may be selected from kaolin, ball clay, feldspar, talc, bentonite and combinations thereof.

The exact nature of the first mineral will be determined by the end use of the ceramic; suitable properties for ceramic precursor minerals are known in the art.

The feldspar may be sodic feldspar and/or potassic feldspar.

In certain embodiments, the first mineral is a mixture of feldspar, talc, kaolin and ball clay. The feldspar may be a mixture of sodic and potassium feldspar.

### Second mineral

The ceramic precursor of the invention may optionally include one or more further minerals, i.e., second minerals. The second mineral may be selected from one or more of zircon, quartz, mullite, aluminosilicate, alumina, cordierite, titania, silica, magnesia, spinel, kyanite, dolomite, bauxite, gypsum, sillimanite, andalusite, silicates, titanates, chamotte, mica, wollastonite and ferrites.

In certain embodiments, the second mineral is a mixture of zircon and quartz.

Various combinations of first and second mineral are contemplated, depending on the properties of the final ceramic prepared therefrom. In certain embodiments, the first and second minerals are selected in order to produce a ceramic product which is a porcelain ceramic tile or a porcelain countertop material.

In certain embodiments, the first mineral is a mixture of feldspar, talc, kaolin and ball clay and the second mineral is a mixture of zircon and quartz.

Based on the total dry weight of the mineral components of the ceramic precursor, i.e., excluding porogen and pore-forming agent, the various minerals may each be present in an amount ranging from about 1 wt. % to about 50 wt. %, for example, from about 2 wt. % to about 25 wt. %.

For example, talc may be present in an amount ranging from about 1 w. % to about 10 wt. %, for example, from about 1 wt. % to about 8 wt. %, for from about 2 w. % to about 5 wt. %, or from about 2 wt. % to about 4 wt. %.

For example, feldspar may be present in an amount ranging from about 20 wt. % to about 45 wt. %, for example, from about 35 wt. % to about 40 wt. %. The feldspar may be a mixture of sodic feldspar and potassic feldspar. The ratio of sodic feldspar to potassic feldspar may be from about 1:3 to about 3:1, for example, from about 1:2 to about 2:1, or from about 2:3 to about 3:2, or about 1:1.

For example, kaolin may be present in an amount of from about 10 wt. % to about 30 wt. %, for example, from about 15 wt. % to about 25 wt. %, or from about 18 wt. % to about 22 wt. %.

For example, ball clay may be present in an amount of from about 10 wt. % to about 30 wt. %, for example, from about 15 wt. % to about 25 wt. %, or from about 18 wt. % to about 22 wt. %.

For example, zircon may be present in an amount of from about 10 wt. % to about 30 wt. %, for example, from about 15 wt. % to about 25 wt. %, or from about 18 wt. % to about 22 wt. %.

For example, quartz may be present in an amount of from about 1 wt. % to about 10 w. %, for example, from about 3 wt. % to about 7 w. %, or from about 4 wt. % to about 6 wt. %

Generally, the minerals will be provided in any suitable particulate form for processing into a ceramic in accordance with the methods described herein.

### Kit of parts, additive composition, and ceramic precursor composition

A ceramic precursor composition is a mixture of materials for making a ceramic, before firing. It includes the first and optional second minerals described above, in selected amounts, as well as the porogen and pore-forming agent.

The kit of parts comprises part A and part B which are subsequently mixed to form a mixture corresponding to the ceramic precursor composition, as described herein. The resulting mixture is shaped and then fired to make a porous ceramic. Parts A and/or B may be separately processed prior to their combination. Part A comprises the porogen and first and optional second minerals. Part A may be subjected to a grinding step before mixing with part B. Part B comprises or consists of the pore-forming agent, i.e., the oxide-based microspheres. As the microspheres may be in some instances less able to withstand grinding than the porogen in part A, processing part B preserves the pore-forming capability of the oxide-based microspheres. The kit of parts therefore facilitates a manufacturing method in which the pore-generating capability of the microspheres is preserved during the preliminary manufacturing steps. As noted, when part A and part B are combined the resulting mixture has a composition corresponding to any of the ceramic precursor composition described herein, including the relative amounts of first and optional second mineral.

An additive composition in the invention is a combination of at least the porogen and the pore-forming agent, which may be added into a ceramic manufacturing process to obtain a porous ceramic. In other words, the additive composition is provided separately for combining with mineral components, including any of the first and second minerals described above. Once combined with the first and optional second mineral components, the resulting mixture has a composition corresponding to any of the ceramic precursor compositions described herein, including the relative amounts of first and optional second minerals.

The weight ratio of porogen to pore-forming agent in the kit of parts, additive composition and ceramic precursor composition may be from about 1:600 to about 1:4000. For example, the ratio of porogen to pore-forming agent may be from about 1:650 to about 1:3000.

In certain embodiments, the weight ratio of porogen to pore-forming agent in the kit of parts, additive composition and ceramic precursor composition may be from about 1:550 to about 1:700, or from about 1:650 to about 1:750, or from about 1:700 to about 1:800, or from about 1:800 to about 1:1000, or from about 1:1000 to about 1: 1200, or from about 1:1200 to about 1:2000, or from about 1:2000 to about 1:4000, or from about 1:3000 to about 1:4000.

### Method

Various methods are suitable for forming a ceramic in accordance with the invention.

The ceramic precursor composition may simply be shaped and fired to form a porous ceramic. Optionally the ingredients may first be mixed, e.g., ground or milled, to ensure homogeneity.

If the first mineral in the precursor composition constitutes the entire mineral content (except the porogen and pore-forming agent) of the ceramic, then this embodiment offers a simple method for ceramics manufacture to make a ceramic with desired porosity characteristics whilst also providing a premix of the porogen which may be more easily combined with other ceramic precursor minerals.

If the first mineral in the precursor composition does not constitute the entire mineral content of the ceramic, the remaining ingredients may be mixed with the precursor composition prior to shaping. This embodiment enables a reduction in transport weight for raw materials.

In another method of the invention, parts A and B of the kit of parts are mixed together, the resulting mixture is shaped and then fired to make a porous ceramic. Parts A and/or B may be separately processed prior to their combination. Part A comprises the porogen and first mineral material and may be subjected to a grinding step before mixing with part B. As discussed above, the microspheres in part B may be less able to withstand grinding than the porogen in part A.

In another method of the invention, an additive composition comprising the pore-forming agent and the porogen is provided. This affords efficiency of transport for the additive mixture. The mixture may be added into the mixing and/or grinding and/or spray-drying stages of an existing ceramics manufacturing line to obtain finished ceramics having desired porosity profiles.

Advantageously, the creation of pores in the final ceramic via the use of the porogen and pore-forming agent in these ways provides a ceramic product having a desirable balance of properties, including a uniform lightweighting of between 10 and 22% across a range of firing temperatures and acceptable water absorption properties. As discussed above, any given furnace for firing ceramics of the type described herein may have a temperature gradient across the furnace. The gradient may be as much as 100 °C. Thus, in any given firing process, different parts of the ceramic may be subjected to different firing temperatures. This may lead to uneven lightweighting characteristics, e.g., due to uneven distributions of porosity. The present invention may therefore ameliorate these problems. Similarly, the temperature of a furnace may differ across a range of temperatures from one day to the next. Ensuring that any given furnace runs at a specific and constant temperature can be time consuming and costly. Therefore, having ceramic precursor compositions, such as these provided herein, which are less sensitive to variations in firing temperature whilst providing consistent lightweighting and other properties is highly advantageous.

The method using the kit of parts may comprise:
- wet grinding mineral raw materials in the presence of the porogen;
- granulating the wet-ground mixture
- mixing the granulate with the pore-forming agent.

In more detail, this method may comprise:
- wet-milling the mineral raw materials and the porogen in an aqueous environment, e.g., with water and a deflocculant agent, to obtain a slurry.
- drying the slurry, for example, overnight in an oven at a suitable temperature, e.g., at least about 100 °C, typically at about 110°C
- grinding the resultant dried cake to obtain a substantially dry powder
- granulating the dry powder with an addition of small amount of water, e.g., from about 5-10 wt. % water based on the dry weight of the powder, e.g., 6 wt. % water
- mixing the granulate with the pore-forming agent to achieve at or near a homogeneous mixture
- shaping, pressing and firing the mixture.

Alternatively, this method may comprise:
- wet-milling the mineral raw materials and the porogen in an aqueous environment, e.g., with water and a deflocculant agent, to obtain a slurry
- sieving the slurry through a 125µm sieve,
- spray-drying the slurry to obtain a granulate
- mixing the granulate with the pore-forming agent to achieve at or near a homogeneous mixture
- shaping, pressing and firing the mixture.

Alternatively, the pore-forming agent can be mixed with the slurry obtained by wet-milling, before sieving.

In certain embodiments, the ceramic precursor composition is formed by combining ceramic raw materials and the porogen in a first mixing stage, and the pore-forming agent is subsequently mixed in during a second mixing stage.

In certain embodiments, the method comprises wet-grinding the first mineral and the porogen to obtain a slurry; drying the slurry to obtain a cake; grinding the cake to obtain a powder; incorporating the pore-forming agent during granulation of the powder; pressing the granulate to obtain a pressed product, and firing, for example, at a temperature of at least about 1000 °C, the pressed product to obtain a ceramic.

Wet-milling may be performed with any suitable apparatus, such as, for example, a mixer, or mill, for example, a ball mill, such as a planetary ball mill.

The total milling time may be less than about 25 hours, for example, less than about 20 hours, or less than about 15 hours, or less than about 10 hours, or less than about 5 hours, or less than about 3 hours, or less than about 2 hours, or less than about 1 hour, or less than about 45 minutes. Typically, the total milling time is greater than about 10 minutes.

Water may be partially or completely eliminated from the mixture at the end of milling, using any suitable drying technique. For example, the water may be removed by oven drying or spray-drying to prepare a powder, for example, a ready-to-press powder. Other dryers include tunnel dryers and periodic dryers.

In wet granulation, granules are formed by the addition of a granulation liquid onto a powder bed which is typically under the influence of an impeller (in a high-shear granulator), screws (in a twin screw granulator) or air (in a fluidized bed granulator). The agitation resulting in the system along with the wetting of the components within the formulation results in the aggregation of the primary powder particles to produce wet granules. The granulation liquid (fluid) contains a solvent or carrier material which is volatile so that it can be removed by drying, and depending on the intended application, be non-toxic. Typical liquids include water, ethanol and isopropanol either alone or in combination. The liquid solution can be either aqueous based or solvent-based. Aqueous solutions have the advantage of being safer to deal with than other solvents. Shaping into a green body may be done by any known ceramic forming process. Forming is making the mixed material into a green body of any desirable form or shape, e.g., a plate (e.g., tile), panel or brick, cylinder, sphere, or a complex shape. In certain embodiments, the lightweight ceramics of the invention may suitably be used as countertops and therefore the green body of a corresponding form is formed by pressing the mixture.

Shaping may involve any one of conventional processes such as extrusion, slip-casting, pressure-casting, throwing, tape-casting, injection molding, or pressing, including dry pressing, isostatic pressing, or hot isostatic pressing. Pressing may be carried out under any suitable pressure. For example, a pressure of at least about 100 bar, or at least about 150 bar, or at least about 200 bar.

Shaping may comprise pressing, for example into a slab, tile or countertop, with width and length dimensions each exceeding 1 m, and optionally with a thickness less than about 0.05 m.

Firing may be carried out at any suitable temperature. It may comprise a heating stage in which the temperature is gradually increased over a period of time, followed holding at a maximum temperature for a period of time, following by a cooling stage. The maximum firing temperature is any temperature which is suitable for making ceramic materials, e.g., tiles, slabs or countertops. Suitable maximum firing temperatures may be from about 1000 °C to about 1500 °C, for example, from about 1000 °C to about 1350 °C, from about 1050 °C to about 1250 °C from about 1100 °C to about 1200 °C. As discussed above, the firing temperature with the furnace may vary across the furnace, e.g., a temperature gradient of up to about 100 °C, for example, up to about 80 °C.

The resulting ceramic may have a lightweighting of between 10 and 22% depending on the exact ratio of pore forming agents and porogens and depending on the firing temperature, with a variation between the maximum and the minimum lightweighting for any given sample of less than 8% for a firing temperature of between 1120°C and 1200°C, i.e. less than 0,1% by degree celsius. The firing temperature can vary within a single furnace and for a single firing batch.

The porogen can generate pores that do not contribute to the chemical composition of the final ceramic, if the pores are made by the decomposition of the porogen to gaseous products. Alternatively, parts of the porogen which do not decompose may become incorporated into the ceramic matrix. The pore-forming agent essentially inserts ready-made pores into the final ceramic. Advantageously, this may cause less disruption to the mechanical strength of the green body in the firing process because the volume of the pores is already incorporated into the green body, unlike the volume of the pores generated by gas decomposition products of a porogen. Without wishing to be bound by theory, it is believed that the outer shell of the microsphere may melt or otherwise fuse into the ceramic matrix, forming a wall about the pore which is relatively richer in the materials from which the microspheres are made, e.g., silica-alumina.

### Ceramic products

The ceramic products produced from the various compositions and methods described herein are many and various and possess a desirable balance of properties, including uniform lightweighting and suitable water absorption. It must be borne in mind that increase porosity increases lighweighting, which is desirable, is also prone to increase water absorption, which is not desirable. Thus, being able to control lightweighting and at the same time limit increase in water absorption is advantageous. The present inventors have developed a novel solution which is to control both porosity and water absorption through the judicious choice of porosity inducing additives. Other properties include mechanical and optical properties.

Lightweighting is assessed relative to a ceramic which is made from a comparable composition which does not comprise the porogen and pore-forming. In other words, the mixture of mineral types and relative amounts is identical, but no porogen and pore-forming agent is included.

Lightweighting a ceramic is desirable because i) it means less material overall can be used to prepare the ceramic product and ii) they are lighter and therefore easier to handle and transport.

Unformity or stability of lightweighting of a ceramic is also desirable, as discussed above. Being able to uniformly lightweight a ceramic means that relatively larger temperature gradients in the furnace may be tolerated and/or that the temperature of a furnace from one day to the next does not necessarily have to be as precisely controlled as otherwise may be the case.

Generally, the ceramics produced from the compositions and methods described herein have a lightweighting of from about 10 % to 22 %, relative to a comparable ceramic produced from the same mixture of minerals but not including the porogen and pore-forming agent.

Generally, the ceramic has one or more of the following properties:
a. % lightweighting of from about 5 % to about 25 %, for example, from about 10 % to about 22 %, compared to a ceramic which is made from a comparable composition but which does not include the porogen and pore-forming agent, for example, a lightweighting of from about 10 % to about 20 %, or at least about 7.5 %, or at least about 10 %, or at least about 12 %or at least about12 %, or at least about15 %, or at least about 18 %; and/or
b. a water absorption index (which may be calculated according to ISO 10545-3:2018) of less than about 0.80 %, for example less than about 0.50 %, for example less than about 0.40 %, for example less than about 0.30 %, and/or at least about 0.10 %, for example at least about 0.20 %; and/or
c. a bulk density (which may be calculated according to ISO 10545-3:2018) of at least about 1.5 g/cc, for example at least about 1.7 g/cc, or at least about 2.0 g/cm³, or less than about 2.5 g/cc, for example less than about 2.3 g/cc, or less than about 2.2 g/cc, for example a bulk density of from about 1.9 to about 2.3 g/cc; and/or
d. a modulus of rupture (which may be determined in accordance with ISO 10545-4:2019) of at least about 25 N/mm², for example at least about 28 N/mm², for example at least about 30 N/mm², for example at least about 32 N/mm², and/or less than about 50 N/mm², for example less than about 45 N/mm², for example less than about 42 N/mm²; and/or a modulus of rupture within the range of about 25-45 N/mm², for example about 28-42 N/mm².

In certain embodiments, the ceramic may have the following properties: % lightweighting of from about 5 % to about 25 %, for example, from about 10 % to about 22 % compared to a ceramic which is made from a comparable composition but which does not include the porogen and pore-forming agent; and a water absorption index of from about 0.10 % to about 0.80%; and a bulk density of from about 1.5 g/cc to about 2.5 g/cc; and a modulus of rupture in N/mm² of from about 25 to about 50.

In certain embodiments, the ceramic may have the following properties: % lightweighting of from about 10 % to about 20 % compared to a ceramic which is made from a comparable composition but which does not include the porogen and pore-forming agent; and a water absorption index of from about 0.10 % to about 0.50%; and a bulk density of from about 1.7 g/cc to about 2.3 g/cc; and a modulus of rupture in N/mm² of from about 25 to about 45.

In certain embodiments, the ceramic may have the following properties: % lightweighting of from about 15 % to about 20 % compared to a ceramic which is made from a comparable composition but which does not include the porogen and pore-forming agent; and a water absorption index of from about 0.20 % to about 0.40 %; and a bulk density of from about 1.9 g/cc to about 2.3 g/cc; and a modulus of rupture in N/mm² of from about 30 to about 42.

The ceramic may be in the form of a slab, for example, a tile or countertop optionally with width and/or length dimensions exceeding 1.0 m, for example, exceeding 2.0 m, or exceeding 3.0 m, further optionally with a thickness of less than about 0.05 m, or less than about 0.04 m, or less than about 0.03 m, or less than about 0.02 m, or less than about 0.01 m. Typically, the thickness is at least about 0.002 m, for example, at least about 0.003 m, or at least about 0.004 m, or at least about 0.005 m; for example, with a thickness less or equal to 0.03 m and at least about 0.003 m.

In certain embodiments, the ceramic product, for example, ceramic tile, meets the requires of BS EN 14411:2016.

In certain embodiments, the ceramic is a porcelain, for example, as defined as group B1a in EN 14411:2016.

Further, the ceramics produced from the compositions and methods described herein have a uniformity or stability of lightweighting, such that across a firing temperature gradient of about 80 °C, lightweighting varies by no more than +/- 4 %. For example, if firing a ceramic precursor composition at a given temperature, e.g., 1150 °C, produces a ceramic having a lightweighting of 15 %, then ceramics produced from the same ceramic precursor composition, when fired at 1150 °C +/- 40 °C, have a lightweighting in the range of from 11 % to 19 %.

As such, the combination of porogen and pore-forming agents described herein may be used/incorporated in a ceramic precursor composition to uniformly lightweight the resultant ceramic produced following firing across a range of firing temperatures.

For example, in certain embodiments, there is provided the use of oxide-based microspheres and a carbide and/or carbonate compound, as described herein, to uniformly lightweight a ceramic, for example, at a firing temperature of at least 1000 °C and across a firing temperature range of about 100 °C and/or to obtain a ceramic with a water absorption index of less than about 0.50 %, for example, at a firing temperature of at least about 1100 °C and across of firing temperature range of about 80 °C, for example, at temperature of at least 1120 °C up to 1200 °C, i.e., across a temperature range of 80 °C.

For example, in certain embodiments, there is provided the use of oxide-based microspheres and a carbide and/or carbonate compound in a method of manufacturing a ceramic, as described herein, to uniformly lightweight the ceramic across a range of firing temperatures of ±100 °C, such as t40 °C. In certain embodiments, the temperature ranges from 1120 °C to 1200 °C, i.e., across a temperature range of 80 °C.

The invention also provides a method of assessing the lightweighting stability of a ceramic, the method comprising:
- making or obtaining a plurality of granulated ceramic precursor formulations, each formulation in the series comprising the same type and amount of ceramic raw materials (i.e., the first and optional second minerals describe herein) and a different weight ratio of porogen(s) and pore-forming agent(s), wherein the porogen is a material that decomposes upon firing (as described herein) and the pore-forming agent is or comprises oxide-based microspheres (as described herein);
- making or obtaining a reference granulated ceramic precursor formulation, wherein the reference granulated ceramic precursor comprises the same type and amount of ceramic raw materials as each of the plurality of granulated ceramic precursor formulations, but is devoid of the porogen(s) and pore-forming agent(s)
- shaping and then firing each of the plurality of ceramic precursor formulations and the reference to form a ceramic, wherein each formulation is fired at sequentially increasing firing temperatures, wherein the temperature difference between the initial firing temperature and the final firing temperature is at least about 50 °C, for example, 50-150 °C, for example, a temperature difference of 80 °C, for example, over the range of 1120 °C to 1200 °C;
- the method further comprising assessing the lightweighting stability of each of the plurality of ceramics by comparing the % lightweighting of each of the plurality of ceramics relative to the reference ceramic fired at the same temperature.

### EXAMPLES

Ceramic samples were prepared using the following parts by weight of first mineral materials with the addition of perlite and silicon carbide in the relative quantities shown in table 1.

| | |
|---|---|
| Sodic feldspar | 22 |
| Potassic feldspar | 20 |
| Talc | 3 |
| Kaolin | 20 |
| Ball clay | 19.5 |
| Zircon | 20 |
| Quartz | 5.5 |
| Total first minerals | 100 |

**Table 1: parts by weight of perlite (pore-forming agent) and silicon carbide (porogen) in samples 1 to 15.**

| Sample number | Perlite closed microspheres (g) | Silicon carbide (g) | Ratio perlite:SiC |
|---|---|---|---|
| 1 (comparative) | 0 | 0 | 0:0 |
| 2 (comparative) | 10 | 0 | 10:0 |
| 3 (comparative) | 0 | 0.025 | 0:0.025 |
| 4 | 5 | 0.013 | 385:1 |
| 5 | 2.5 | 0.019 | 132:1 |
| 6 | 7.5 | 0.006 | 1250:1 |
| 7 | 1.25 | 0.022 | 57:1 |
| 8 | 3.75 | 0.016 | 234:1 |
| 9 | 6.25 | 0.009 | 694:1 |
| 10 | 8.75 | 0.003 | 2917:1 |
| 11 | 5.5 | 0.011 | 500:1 |
| 12 | 6 | 0.01 | 600:1 |
| 13 | 6.5 | 0.009 | 722:1 |
| 14 | 7 | 0.008 | 875:1 |
| 15 | 9 | 0.003 | 3000:1 |

Silicon carbide as the porogen was used in powder form (commercially available as UF10(RTM)).

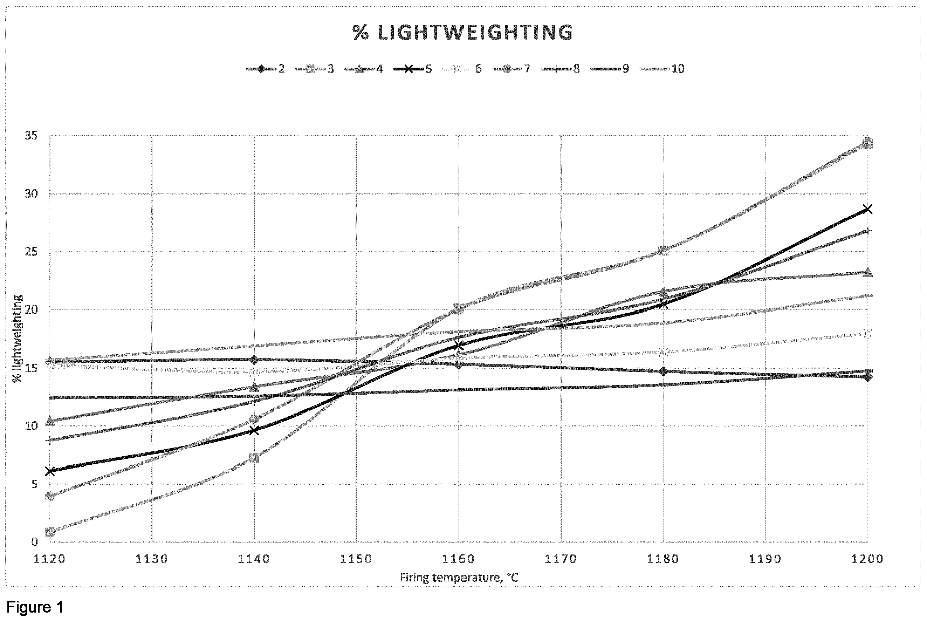

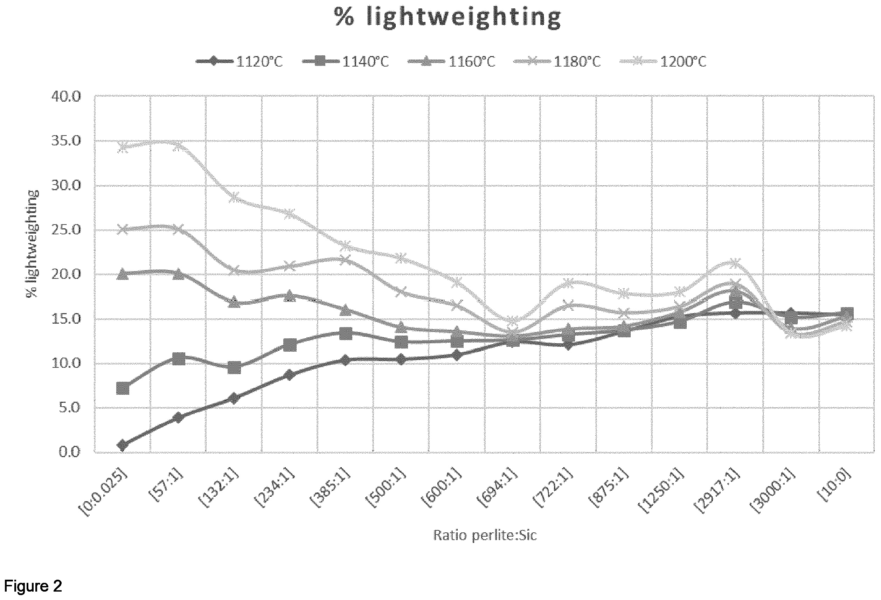

Bulk density was measured for each ceramic composition and lightweighting calculated as % change in density compared to comparative sample 1, which has no porogen and no pore-forming agent. The results are shown in Table 2 (bulk density) and in Figures 1 and 2 (% lightweighting).

**Table 2: experimentally-determined values for lightweighting and bulk density of ceramic samples 1 to 15 at firing temperatures of 1120 to 1200 °C. Values for pore-forming agent and perlite are as referred to in table 1.**

| Sample number | | 1^{∗} | 2^{∗} | 3^{∗} | 4 | 5 | 6 | 7 | 8 | 9 | 10 | 11 | 12 | 13 | 14 | 15 |
|---|---|---|---|---|---|---|---|---|---|---|---|---|---|---|---|---|
| Pore-forming agent (perlite | | 0 | 10 | 0 | 5 | 2.5 | 7.5 | 1.25 | 3.75 | 6.25 | 8.75 | 5.5 | 6 | 6.5 | 7 | 9 |
| Porogen (silicon carbide) | | 0 | 0 | 0.025 | 0.013 | 0.019 | 0.006 | 0.022 | 0.016 | 0.009 | 0.003 | 0.011 | 0.01 | 0.009 | 0.008 | 0.003 |
| 1120°C | Bulk density, g/cc | 2.55 | 2.15 | 2.52 | 2.28 | 2.39 | 2.16 | 2.44 | 2.32 | 2.23 | 2.15 | 2.28 | 2.26 | 2.24 | 2.2 | 2.15 |
| | Lightweighting, 96 (1) | 0 | 15.5 | 0.8 | 10.4 | 6.1 | 15.3 | 3.9 | 8.7 | 12.4 | 15.7 | 10.5 | 11 | 12.1 | 13.6 | 15.7 |
| | Water absorption, % | 0.47 | 6.66 | 0.28 | 0.73 | 0.64 | 3.64 | 0.25 | 0.69 | 2.2 | 6.64 | 4.34 | 4.79 | 5.33 | 6.03 | 7.11 |
| 1140°C | Bulk density, g/cc | 2.58 | 2.18 | 2.39 | 2.24 | 2.33 | 2.2 | 2.31 | 2.27 | 2.26 | 2.14 | 2.26 | 2.26 | 2.24 | 2.23 | 2.19 |
| | Lightweighting, % (1) | 0 | 15.7 | 7.2 | 13.4 | 9.6 | 14.7 | 10.6 | 12.1 | 12.6 | 16.9 | 12.4 | 12.5 | 13.2 | 13.7 | 15.2 |
| | Water absorption, % | 0.11 | 3.33 | 0.11 | 0.37 | 0.27 | 0.93 | 0.22 | 0.38 | 0.72 | 2.55 | 0.98 | 1.13 | 2.05 | 4.48 | 5.69 |
| 1160°C | Bulk density, g/cc | 2.58 | 2.18 | 2.06 | 2.16 | 2.14 | 2.17 | 2.06 | 2.12 | 2.24 | 2.11 | 2.21 | 2.22 | 2.22 | 2.21 | 2.22 |
| | Lightweighting, 96 (1) | 0 | 15.3 | 20.1 | 16.1 | 16.9 | 15.8 | 20.1 | 17.6 | 13.1 | 18.1 | 14.1 | 13.6 | 13.9 | 14.2 | 14 |
| | Water absorption, % | 0.13 | 1.11 | 0.19 | 0.27 | 0.24 | 0.45 | 0.26 | 0.29 | 0.4 | 0.69 | 0.59 | 0.59 | 0.98 | 2.48 | 3.31 |
| 1180°C | Bulk density, g/cc | 2.55 | 2.18 | 1.91 | 2 | 2.03 | 2.13 | 1.91 | 2.02 | 2.2 | 2.07 | 2.09 | 2.13 | 2.13 | 2.15 | 2.21 |
| | Lightweighting, 96 (1) | 0 | 14.7 | 25.1 | 21.6 | 20.5 | 16.4 | 25.1 | 20.9 | 13.5 | 18.9 | 18 | 16.5 | 16.5 | 15.7 | 13.4 |
| | Water absorption, % | 0.13 | 0.47 | 0.23 | 0.26 | 0.21 | 0.34 | 0.2 | 0.23 | 0.31 | 0.39 | 0.35 | 0.3 | 0.39 | 0.54 | 0.68 |
| 1200°C | Bulk density, g/cc | 2.5 | 2.14 | 1.64 | 1.92 | 1.78 | 2.05 | 1.64 | 1.83 | 2.13 | 1.97 | 1.95 | 2.02 | 2.02 | 2.05 | 2.16 |
| | Lightweighting, 96 (1) | 0 | 14.2 | 34.3 | 23.2 | 28.7 | 18 | 34.5 | 26.8 | 14.8 | 21.2 | 21.8 | 19.1 | 19 | 17.8 | 13.4 |
| | Water absorption, % | 0.11 | 0.27 | 0.42 | 0.26 | 0.23 | 0.2 | 0.31 | 0.22 | 0.23 | 0.25 | 0.26 | 0.27 | 0.22 | 0.27 | 0.35 |
| Modulus of Rupture, N/mm² | | 46.2 ± 3.7 (1160°C) | 30.7 ± 2.3 (1200°C) | 37.1 ± 7.1 (1160°C) | 34.8 ± 2.5 (1160°C) | 40.1 ±2.8 (1160°C) | 34.4 ± 2.6 (1200°C) | 37.3 ± 2.7 (1160°C) | 38.3 ±4.0 (1160°C) | 35.8 ± 2.5 (1200°C) | 33.5 ± 3.0 (1180°C) | 34.8 ± 1.7 (1180°C) | 31.3 ± 2.5 (1180°C) | 29.1 ± 3.3 (1180°C) | 27.2 ± 1.7 (1180°C) | 33.3 ± 2.7 (1200°C) |

| | | | | | | | | | | | | | | | | |
|---|---|---|---|---|---|---|---|---|---|---|---|---|---|---|---|---|
| *Comparative sample (1) compared to sample 1 at same temperature | | | | | | | | | | | | | | | | |

Sample 1 (comparative) is the example against which lightweighting is measured for the other samples, which have the same ingredients except for the porogen and pore-forming agent.

Using only the porogen (silicon carbide in the examples) or only the pore-forming agent (closed perlite microspheres) does not result in uniform lightweighting during firing and at the same time the required water absorption, of maximum 0.5 wt%. A ratio of from 1:600 to 1:4000 (see, for example, Samples 6, 9 and 10) of porogen to pore-forming agent has been found to surprisingly result in a good degree of lightweighting that is uniformly achieved across firing temperatures of from 1120 to 1200 °C, and at the same time providing acceptable levels of water absorption, particularly at the lower firing temperatures. This means that large format ceramics, such as large tiles, can be manufactured with consistent properties across each piece, regardless of the furnace region in which the ceramic was fired (i.e., largely independent of the temperature gradient often found in furnaces of the size required to fire large ceramic slabs and the like).

## Claims

1. Ceramic precursor composition comprising:
a first mineral chosen from kaolin, ball clay, feldspar, talc, and/or bentonite, and any mixture thereof, and optionnally a second mineral chosen from quartz, zirconium silicate, alumina, and any mixture thereof,
the sum of the first and optionally the second mineral being of at least about 80 wt. % (based on the ceramic precursor composition weight),
a porogen, and
a pore-forming agent,
the porogen being selected from a carbide and/or a carbonate compound, and
the pore-forming agent comprising oxide-based microspheres.

2. A ceramic precursor kit of parts comprising a part A and part B, wherein part A comprises a porogen selected from a carbide and/or a carbonate compound, and a first mineral selected from kaolin, ball clay, feldspar, talc, and/or bentonite, and wherein part B is a pore-forming agent comprising oxide-based microspheres.

3. An additive composition for a ceramic, the additive composition comprising a porogen and a pore-forming agent, wherein the porogen is selected from a carbide and/or a carbonate compound, and the pore-forming agent comprises oxide-based microsphere.

4. Ceramic precursor composition, kit of parts, or additive composition according to any preceding claim, wherein the oxide based microspheres are cenospheres and/or plerospheres.

5. Ceramic precursor composition, kit of parts, or additive composition according to any preceding claim, wherein the oxide-based microspheres are selected from alumina, perlite and/or mullite.

6. Ceramic precursor composition, kit of parts, or additive composition according to any preceding claim, wherein the oxide-based microspheres have a maximum diameter of about 1000 µm, for example a maximum diameter of about 200 µm, and/or wherein the particle size, d₅₀, of the pore-forming agent is from about 2 to 300 µm, for example less than about 200 µm, or less than about 150 µm.

7. Ceramic precursor composition, kit of parts, or additive composition according to any preceding claim, wherein the porogen is silicon carbide, for example, having a d₅₀ of from about 0.5 to 10 µm, for example, less than about 1.0 µm and, for example, a specific surface area, BET, of from about 5.0 to 15.0 m²/g.

8. Ceramic precursor composition, kit of parts, or additive composition according to any preceding claim, wherein (1) the weight ratio of the porogen to the pore-forming agent is from about 1:600 to 1 :4000; or (2) (i) the weight ratio of the porogen to the ceramic precursor composition is from about 0.0025:100 to 0.025:100, and/or (ii) the weight ratio of the pore-forming agent to the ceramic precursor is from about 5:100 to 10:100.

9. A method of preparing a ceramic, comprising:
i. shaping and firing a ceramic precursor composition according to any preceding claim,
ii. mixing parts A and B of the kit of parts according to any preceding claim, shaping and then firing the mixture, or
iii. combining the additive composition according to any preceding claim with at least a first mineral selected from kaolin, ball clay, feldspar, talc, and/or bentonite, shaping and then firing the mixture.

10. The method of claim 9, wherein shaping comprises pressing, for example, into a slab, for example a tile or countertop optionally with width and length dimensions exceeding 1 m, for example, exceeding 2 m, further optionally with a thickness of less than about 0.05 m.

11. The method according to claim 9 or 10, wherein the ceramic precursor composition is formed by combining ceramic raw materials and the first pore-forming agent in a first mixing stage and a second mixing stage, and the second pore-forming agent is subsequently mixed in during a second mixing stage.

12. The method according to claims 9, 10 or 11, wherein the method comprises:
wet-grinding the first mineral and the porogen to obtain a slurry,
drying the slurry to obtain a cake,
grinding the cake to obtain a powder,
incorporating the pore-forming agent during granulation of the powder,
pressing the granulate to obtain a pressed product, and
firing, for example, at a temperature of at least about 1000 °C, the pressed product to obtain a ceramic.

13. A ceramic made from the ceramic precursor composition or kit of parts according to any one of claims 1-8, or obtainable by a method according to any one of claims 9-12.

14. A ceramic, for example, a ceramic according to claim 14, wherein the ceramic has one or more of the following properties:
a. % lightweighting of from about 5 to about 25 %, for example, from about 10 %to about 22 %, compared to a ceramic which is made in accordance with any one of claims 10-13 but which does not include the porogen and pore-forming agent,
b. a water absorption index of less than 0.5%, and/or
d. a modulus of rupture of at least 32 N/mm² as determined in accordance with ISO 10545-4:2016.

15. A ceramic according to claim 13 or 14 in the form of a slab, for example, a tile or countertop optionally with width and length dimensions exceeding 1 m, for example, exceeding 2 m, further optionally with a thickness of less than about 0.05 m.

16. A ceramic according to claim 13, 14 or 15, wherein the ceramic is porcelain ceramic

17. Use of oxide-based microspheres and a carbide and/or carbonate compound (i) to uniformly lightweight a ceramic, for example, at a firing temperature of at least 1000 °C and across a firing temperature range of about 100 °C and/or to obtain a ceramic with a water absorption index of less than 0.5%; or (ii) in a method of manufacturing a ceramic to uniformly lightweight the ceramic across a range of firing temperatures of ±100 °C, such as t40 °C..
